# EUROPÄISCHE PATENTANMELDUNG

(11) **EP 4 088 580 A1**
(43) Veröffentlichungstag der Anmeldung: **16.11.2022**
(21) Anmeldenummer: 22172956.9
(22) Anmeldetag: 12.05.2022
(51) Int. Cl.: A22C 11/10

(54) **PORTIONIERVORRICHTUNG - UND VERFAHREN SOWIE CRIMPELEMENT**

(30) Priorität: 12.05.2021 DE 102021112513
(71) Anmelder: VEMAG Maschinenbau GmbH, 27283 Verden/Aller (DE)
(72) Erfinder: Knodel, Peter, 28876 Oyten (DE); Köhler, Sven, 27283 Verden (DE)
(74) Vertreter: Eisenführ Speiser

(57) **Zusammenfassung**

Die Erfindung betrifft eine Portioniervorrichtung (6) zum Ausbilden von Portionen aus mit Lebensmittel-Masse befüllten, länglichen Hüllen, insbesondere von Würstchen (5) aus mit Wurstbrät gefüllten Alginat-Hüllen, mit zwei beabstandet zueinander angeordneten, mittels mindestens eines Antriebs antreibbaren umlaufenden Transportelementen (16, 18), die jeweils einen Transportbereich aufweisen, welcher im Betrieb in eine Transportrichtung (3) bewegt wird, und einen Rücklaufbereich, wobei die gefüllte Hülle zwischen die Transportbereiche der beiden Transportelemente (16, 18) eingebracht und in Transportrichtung (3) transportiert werden kann, mindestens einem an jedem Transportelement (16, 18) angeordneten seitlich von dem Transportelement (16, 18) abstehenden Crimpelement (20, 22), wobei zwei Crimpelemente (20, 22) der beabstandeten Transporteelemente (16,18) so geformt und im Transportbereich gegenüberliegend angeordnet sind und zusammenwirken, dass die gefüllte Hülle unter Verdrängung der Masse in einem Einschnürbereich eingeschnürt wird. Erfindungsgemäß ist vorgesehen, dass mindestens eines der Crimpelemente (20, 22) auf seinem im Transportbereich einem gegenüberliegenden Crimpelement (20, 22) wenigstens teilweise zugewandten Funktionsbereich eine solche Form aufweist, dass in dem Einschnürbereich der Hülle Wellen, Knicke und/oder Falten ausgebildet werden, welche sich insbesondere im Wesentlichen parallel zur Transportrichtung (3) erstrecken. Ferner betrifft die Erfindung ein entsprechendes Portionierverfahren sowie ein Crimpelement (20, 22).

## Beschreibung

Die Erfindung betrifft eine Portioniervorrichtung gemäß Oberbegriff des Anspruchs 1 undein Verfahren gemäß Oberbegriff des Anspruchs 17. Die Erfindung betrifft weiterhin ein Crimpelement für eine Portioniervorrichtung gemäß Oberbegriff des Anspruchs 15.

Bei bekannten Verfahren und Vorrichtungen zur Herstellung von Würstchen werden mithilfe einer Pumpe und Portioniervorrichtung Kunst- oder Naturdärme mit pastöser Masse wie beispielsweise Fleischbrät befüllt und portioniert; auf gleiche Weise werden auch andere Massen in eine Hülle gefüllt. Die Masse wird meist durch eine Füllmaschine mit Fülltrichter und Förderpumpe bereitgestellt.

Bei einer Art von bekannten Verfahren wird mittels einer Abdreheinrichtung und einer Portioniervorrichtung eine Abdrehstelle in der Darm-Hülle erzeugt, die einzelne Portionen von Würstchen voneinander abgrenzt. Derartige Portioniervorrichtungen werden häufig als Längenportioniergerät bezeichnet, wobei Portionen oder Würstchen gleicher Mengen oder gleicher Längen erzeugt werden. Ein Beispiel eines solchen Längenportioniergerätes besteht im Wesentlichen aus zwei parallelen, umlaufenden Ketten oder Bändern, die abschnittsweise in einem Transportbereich mit gleicher Geschwindigkeit in eine Transportrichtung parallel laufen und in einem zwischen den beiden Ketten oder Bändern ausgebildeten Zwischenraum den befüllten Darm einschnüren, vorzugsweise mittels eines Precrimpelements.

Bei einer anderen Art von Portioniervorrichtungen findet keine Abdrehung von Würstchen-Portionen statt, sondern die Hülle wird um einen Strang der Lebensmittel-Masse herum in flüssiger Form coextrudiert. Die Hülle, die häufig aus Alginat hergestellt wird, verfestigt sich. Nach dem Herstellen einer solchen befüllten Hülle dringen während des Weitertransportes in eine Transportrichtung sogenannte Crimpelemente oder Precrimpelemente in die mit Lebensmittel-Masse gefüllte Hülle ein und verdrängen sowohl die Lebensmittel-Masse als auch die Hülle, sodass eine Einschnürstelle entsteht. In Abständen von etwa der Länge eines Würstchens sind zu diesem Zweck an den Förderlementen seitlich abstehende Crimpelemente oder Precrimpelemente angeordnet, die jeweils paarweise mit einem im Betrieb gegenüberliegenden Crimpelment des benachbarten Förderrelements zusammenlaufen und dabei die in der befüllten Darm-Hülle befindliche Masse zusammen mit der Hülle im Bereich einer Einschnürstelle einschnüren. Die Crimpelemente sind an ihrem dem gegenüberliegenden Crimpelement angeordneten Funktionsbereich zum Einwirken auf die gefüllte Hülle auf eine bestimmte Art und Weise geformt und voneinander so beanstandet, dass im Bereich der Einschnürstelle eine im Wesentlichen flache, etwa ebene Form der Hülle entsteht.

Gelegentlich ist in der Praxis beobachtet worden, dass die voneinander getrennten Portionen im Bereich der Einschnürstellen nicht vollständig verschlossen werden können. Dies kann dazu führen, dass die Lebensmittel - Masse aus der Hülle in unerwünschter Weise austritt bzw. kein dauerhaft oder vollständig geschlossenes Würstchen entsteht. Auch entspricht häufig das Aussehen des erzeugten Wurstendes nicht den ästhetischen Ansprüchen, beispielsweise nicht dem oft angestrebten Aussehen einer abgedrehten Wurst. Die typischen Einschnürstellen sind im Stand der Technik häufig nicht bei den hergestellten Würstchen vorhanden.

Die Erfindung möchte eine solche Portioniervorrichtung und die (Pre-) Crimpelemente auf vorteilhafte Weise weiterbilden.

Der Erfindung liegt daher die Aufgabe zugrunde, eine Anordnung und Portioniervorrichtung und ein (Pre-) Crimpelement sowie ein Portionierverfahren und eine Trennvorrichtung bereitzustellen, die den oben genannten und weiteren Problemen entgegenwirken und insbesondere eine zuverlässige, die Hülle schonende Ausbildung von Einschnürstellen und anschliessende Trennung in Portzionen, insbesondere Würstchen ermöglichen.

Die Erfindung löst die Aufgabe mit einer Portioniervorrichtung der eingangs genannten Art, dadurch, dass mindestens eines der Crimpelemente auf seinem im Transportbereich einem gegenüberliegenden Crimpelement wenigstens teilweise zugewandten Funktionsbereich eine solche Form aufweist, dass in dem Einschnürbereich der Hülle Wellen, Knicke und/oder Falten ausgebildet werden, welche sich insbesondere im Wesentlichen parallel zur Transportrichtung erstrecken (Anspruch 1).

Durch die erfindungsgenmäße Form an dem Funktionsbereich oder dem Bereich der äußeren Oberfläche des Crimpelements bzw. der Crimpelemente wird insbesondere beim Pre-Crimpen ein Einschnürbereich zwischen zwei Würstchen bzw. an dessen Enden geformt, sodass in der so verformten Hülle Wellen, Knicke und/oder Falten ausgebildet werden. Diese Wellen, Knicke und/oder Falten erstrecken sich oder sind vorzugsweise im Wesentlichen parallel zur Transportrichtung ausgerichtet. Vorzugsweise weist das Crimpelement an dem Funktionsbereich wenigstens teilweise Vertiefungen und/oder Vorsprünge auf. Durch diese - bevorzugten - Formen der erfindungsgemäßen Crimpelemente wird durch das Ineingriffkommen gegenüberliegender Crimpelemente mit der gefüllten Hülle und während des Transports entlang der Transportbereiche in Transportrichtung eine vorteilhafte Einschnürstelle an den Enden benachbarter Würstchen erzeugt, die zu zuverlässig verschlossenen Enden der Würstchen und zu einer vorteilhaften ästhetischen Anmutung führt, insbesondere einer solchen, die abgedrehten Würstchen nahe kommt oder weitgehend entspricht. Die Einschürstelle ist - anders als im Stand der Technik - schmaler als die äußere Kontur der Würstchen, also gegenüber der maximalen Breite der Würstchen nach innen eingezogen oder eingedrückt. Gleichzeitig kann bei entsprechender Gestaltung der Crimpelemente, insbesondere einer im Wesentlichen wenigstens auch teilweise auch ebenen Form, eine flache, eingeschnürte Einschnürstelle entstehen. Diese kann anschließend in einer gesonderten Trenneinrichtung, insbesondere einer weiteren nachgeschaltenen Crimpeinrichtung vollständig durchtrennt werden, sodass gut verschlossene und ästhetisch ansprechende Wurstenden mit typischen Falten oder Knicken entstehen, die an gefaltete Gardinen erinnern.

Durch die vorzugsweise Vertiefungen und/oder Vorsprünge aufweisende Form der Crimpelemente entstehen vollständig oder nahezu vollständig verschlossene Wurstenden. Durch eine derartige vorzugsweise wellenförmige Ausführung der (Pre-) Crimpelemente in Verbindung mit der Form wird einer coextrudierten Alginat-Hülle (oder Hülle aus ähnlichen Materialien) eine Faltrichtung vorgegeben. Dadurch entsteht eine ähnliche Funktion wie bei einem Fächer. Die Alginat-Hülle faltet sich beim Trennen der Wurst durch die finalen Crimpelemente kontrolliert zusammen. Dabei wird eine Trennstelle erzeugt, deren Ausformung der von abgedrehten, getrennten Würstchen entspricht. Durch erfindungsgemäße Wellenform im Precrimpelement verjüngt sich außerdem die Außenkontur im Bereich der Einschnürstelle. Dies hat den Vorteil, dass der finale Crimper - oder eine andere Trenneinrichtung - einen definierten Bereich zum Einschnüren und Trennen hat. Es bildet sich ein insgesamt ästhetisch ansprechendes zuverlässig geschlossenes Wurstende und ein entsprechend geformtes Würstchen aus.

Vorzugsweise sind die Vertiefungen und/oder Vorsprünge im Wesentlichen in einem mittleren Bereich des Funktionsbereiches angeordnet. D.h. die formgebenden Vertiefungen und/oder Vorsprünge sind schmaler als die äußere Kontur eines Wurst-Stranges. Beim Eindringen der Vertiefungen und/oder Vorsprünge in den Strang entsteht eine vorteilhafte Einschnürung, auch durch mechanische Verklammerungen der Vorsprünge und/oder Vertiefungen mit dem Außenbereich der Hülle und des Stranges.

Vorzugsweise sind die Vertiefungen und/oder Vorsprünge wenigstens teilweise innerhalb eines im Wesentlichen ebenen Abschnitts der Oberfläche des Funktionsbereiches angeordnet. Durch einen solchen im Wesentlichen ebenen Abschnitt lässt sich eine flache Einschnürstelle zwischen zwei Wurstenden erzeugen, die später zuverlässig und sauber durchtrennt werden kann.

Gemäß einer Weiterbildung ist es bevorzugt, dass die Vertiefungen und/oder Vorsprünge im montierten Zustand im Wesentlichen parallel zur Transportrichtung verlaufen. Hierdurch lassen sich besonders ansprechende Formgestaltungen der Wurstenden erzielen.

Gemäß einer weiteren bevorzugten Ausführungsform wird ferner vorgeschlagen, dass die Länge der Vertiefungen und/oder Vorsprünge an einem Crimpelement verschieden ist, vorzugsweise die Länge der Vertiefungen und/oder Vorsprünge von einem mittleren Bereich nach außen zunimmt. So lässt sich die Faltung vorteilhaft und effektiv erreichen.

Gemäß einer alternativen und bevorzugten Weiterbildung ist vorgesehen, dass im Betrieb jeweils gegenüberliegend angeordnete Crimpelemente an ihrem dem gegenüberliegenden Crimpelement zugewandten Funktionsbereich konform ausgebildet sind, insbesondere so ausgebildet und relativ zueinander an den Transportelementen angeordnet sind, dass eine Vertiefung des einen Crimpelementes gegenüber von einem Vorsprung des anderen, gegenüberliegenden Crimpelementes angeordnet ist und/oder ein Vorsprung des einen Crimpelementes wenigstens teilweise in eine Vertiefung des gegenüberliegenden anderen Crimpelementes eintaucht und die dazwischenliegende Hülle dementsprechend gewellt, geknickt und/oder gefaltet wird unter Ausbildung von entsprechenden Wellen, Knicke und/oder Falten.

Das Crimpelement wird ferner vorteilhaft dadurch weitergebildet, dass an einem Crimpelement benachbart von dem mittleren Bereich eines Crimpelementes eine erste, in Transportrichtung vordere, wenigstens teilweise im Wesentlichen in einem Winkel zum mittleren Bereich angeordnete Flankenfläche und/oder eine zweite, in Transportrichtung hintere wenigstens teilweise im Wesentlichen in einem Winkel zum mittleren Bereich angeordnete zweite Flankenfläche ausgebildet sind. Durch die relativ zum mittleren Bereich benachbarten Flankenflächen des Crimpelements lassen sich die gegenüberliegenden Enden der Würstchen, zwischen denen das Crimpelement die Form definiert, besonders vorteilhaft ausformen. Besonders gewünschte etwa halbkugelförmige oder elliptische oder ähnlich geformte Wurstenden lassen sich dadurch herstellen, dass die erste Flankenfläche und/oder zweite Flankenfläche wenigstens teilweise eine konkave Form aufweist. Besonders bevorzugt ist es, dass die erste und/oder zweite Flankenfläche eine im Wesentlichen kugelförmige, elliptische, parabelförmige oder ähnlich gekrümmte konkave Form aufweist, sodass sich durch das Zusammenwirken gegenüberliegend angeordneter Crimpelemente im Wesentlichen ein halbkugelförmig, elliptisches oder parabelförmiges Wurstende einer Würstchen-Portion ausbildet.

Die Interaktion kooperierender, gegenüberliegender Crimpelemente zur Ausformung der Einschnürstelle und der Wurstenden wird dadurch vorteilhaft weitergebildet, dass mindestens ein Crimpelement beabstandet zueinander in äußeren Bereichen in Relation zu den mittleren Bereichen, welche vorzugsweise Vertiefungen und /oder Vorsprünge aufweist, Führungselemente, vorzugsweise plattenförmige Führungselemente aufweist, die einen solchen Abstand zueinander haben, dass das im Betrieb im Transportbereich gegenüberliegend angeordnete Crimpelement von den Führungselementen wenigstens teilweise beidseitig umgriffen werden kann. Durch die Führungselemente werden die gegenüberliegenden Crimpelemente mechanisch geführt oder relativ zueinander ausgerichtet und stabilisiert, und die gefüllte Hülle wird umgriffen und davor geschützt, zu platzen während der Ausformung.

Ein bevorzugtes Ausführungsbeispiel sieht vor, dass die Breite der Vertiefungen und/oder Vorsprünge, gemessen im Wesentlichen quer zur Transportrichtung, etwa 0,2 - 0,8 der gesamten Breite des Crimpelements ist.

Als vorteilhaft hat sich ferner in Versuchen herausgestellt, dass die Vertiefungen und/oder Vorsprünge im Wesentlichen in einer Seitenansicht eine der folgenden Formen entsprechen: Wellenform, Dreieckswellenform, Rechteckwellenform, geschwungene Wellenform, Sinuswellenform.

Eine besonders gute Montage oder auch Demontage zu Wartungszwecken lässt sich dadurch vorteilhaft erreichen, wenn ein Crimpelement an seiner dem Transportelement zugewandten Seite, d.h. an dem Befestigungsbereich zum Befestigen an dem Transportelement, Befestigungsmittel zum lösbaren formschlüssigen Koppeln des Crimpelementes an dem Transportelement, vorzugsweise Schrauben und/oder Einrastmittel und/oder Vorsprünge und/oder Vertiefungen aufweist.

Gemäß eines weiteren Aspektes der Erfindung löst ein Crimpelement der eingangs genannten Art die Aufgabe dadurch, dass das mindestens eines der Crimpelemente auf seinem im Transportbereich einem gegenüberliegenden Crimpelement wenigstens teilweise zugewandten Funktionsbereich eine solche Form aufweist, dass in dem Einschnürbereich der Hülle Wellen, Knicke und/oder Falten ausgebildet werden, welche sich insbesondere im Wesentlichen parallel zur Transportrichtung erstrecken (Anspruch 15).

Hinsichtlich der Vorteile eines solchen erfindungsgemäßen Crimpelements wird auf die obigen Beschreibungen der erfindungsgemäßen Portioniervorrichtung zurVermeidung von Wiederholungen verwiesen.

Zweckmäßigerweise wird das Crimpelement mit den zuvor erläuterten bevorzugten Merkmalen des Crimpelements weitergebildet.

Gemäß eines weiteren Aspektes wird die Aufgabe bei einem Verfahren der eingangs genannten Art dadurch gelöst, dass dass aufgrund der Form und Anordnung der gegenüberliegenden Crimpelemente in dem Einschnürbereich der Hülle Wellen, Knicke und/oder Falten ausgebildet werden, welche sich insbesondere im Wesentlichen parallel zurTransportrichtung erstrecken (Anspruch 17), sowie mit einer Anordnung (Anspruch 18). Hinsichtlich der hierdurch erzielten Vorteile wird ebenfalls auf die obigen Beschreibungen zu den Vorrichtungen Bezug genommen.

Anschließend nach dem Portionieren erfolgt bevorzugt ein Abteilen der Würstchenportion mithilfe einer Trennvorrichtung zum Trennen von Portionen aus mit Lebensmittel-Masse befüllten länglichen Hüllen, insbesondere von Würstchen mit Crimpelementen. Eine solche Trennvorrichtung, die bevorzugt mit der zuvor beschriebenen Portioniervorrichtung gekoppelt wird und dieser nachgeordnet ist (in Transportrichtung), ist nachfolgend anhand von bevorzugten Ausführungsformen der Trennvorrichtung näher erläutert.

Die Trennvorrichtung wird auf vorteilhafte Weise weitergebildet, derart, dass die im Stand der Technik aufgefundenen Nachteile möglichst behoben werden. Insbesondere soll eine Vorrichtung angegeben werden, die eine runde und gleichmäßige Ausbildung der Portionsenden ermöglicht. Erfindungsgemäß wird die Aufgabe bei einer Trennvorrichtung (oder Crimpvorrichtung) dadurch gelöst, dass die Schenkel auf ihrer im Betrieb einem benachbart angeordneten zweiten Crimpelement abgewandten Seite gewölbt ausgebildet sind, sodass die gefüllte Hülle unter Verdrängung der Masse in einem Einschnürbereich zunächst eingeschnürt und anschließend durchtrennt wird.Die Trennvorrichtung macht sich zunutze, dass durch die Wölbung der Crimpelemente die Wurstmasse während der Relativbewegung der gegenüber angeordneten Crimpelemente aufeinander zu und zumindest teilweise aneinander vorbei zunächst über die eigentlich zu erzeugende Form, nämlich die runde Ausbildung der Wurstenden, hinaus verdrängt wird, damit sich nachdem Entspannen bzw. Rückströmen der Masse eine runde Form am Wurstende ausbilden kann. Auf vorteilhafte Weise kann durch die gewölbte Ausbildung der Crimpelemente auch dann noch ein rundes Portionsende ausgeformt werden, wenn die Wurst nach dem Trennen einem Kochprozess unterzogen wird und einem Schrumpfen unterliegt. Es lassen sich somit optisch ansprechend und gleichmäßig ausgebildete Würstchenportionen erzeugen.

Die Trennvorrichtung wird dadurch weitergebildet, dass die Wölbung als konvexe Wölbung ausgebildet ist. Die konvexe Wölbung erstreckt sich vorzugsweise über die gesamte Breite des Crimpelements quer zur Transportrichtung gesehen. Die konvexe Wölbung hat sich als besonders vorzugswürdig erwiesen zur Ausbildung der runden bzw. nahezu runden Portionsenden der Würstchen.

Gemäß einer bevorzugten Ausführungsform weist auch der Grundabschnitt eine Wölbung auf, welche insbesondere als konvexe Wölbung ausgebildet ist. Vorzugsweise weisen sowohl die Schenkel als auch der Grundabschnitt eine gemeinsame konvexe Wölbung auf, wobei die Wölbungen knickfrei, d.h. mathematisch stetig, ineinander übergehen. Mit anderen Worten sind die Schenkel nach der Art einer Hose ausgebildet, wobei die Schenkel gewissermaßen Hosenbeine darstellen. Die Hose weist insoweit eine konvexe Grundform auf.

Gemäß einer bevorzugten Ausführungsform ist auf der Innenseite der Schenkel eine Schneide ausgebildet. Die Schneide ist vorzugsweise derart ausgebildet, dass ein sicheres Durchtrennen der Würstchenportion sichergestellt wird, ohne aber die Hülle während der Verdrängung der Wurstmasse zu beschädigen.

Gemäß einer bevorzugten Ausführungsform ist das Crimpelement aus einem der folgenden Werkstoffe ausgebildet oder besteht daraus: Metall, Polyoxymethylen (POM). Die betreffenden Werkstoffe haben sich als besonders geeignet zur Ausbildung der Crimpelemente erwiesen. Beispielsweise kann die Werkstoffauswahl erfolgen anhand der zu verarbeitenden Wurstdurchmesser bzw. Wurstkaliber oder auch anhand des verwendeten Hüllenmaterials oder der Hüllenmaterialdicke.

Die Erfindung wird dadurch weitergebildet, dass die Crimpelemente derart relativ zu den Transportelementen ausgerichtet sind, dass die Crimpelemente in dem Transportbereich parallel zueinander geführt werden. Auf diese Weise wird sichergestellt, dass trotz der aufeinander zulaufenden Ausrichtung der Transportelemente in Transportrichtung sichergestellt wird, dass die Crimpelemente parallel benachbart zueinander geführt werden können.

Gemäß einer bevorzugten Ausführungsform weisen die Transportelemente Aufnahmemittel zur Aufnahme der Befestigungsabschnitte der Crimpelemente auf. Die Aufnahmemittel der Transportelemente sind insbesondere derart ausgebildet, dass die Crimpelemente auf einfache Weise ausgetauscht werden können und gleichzeitig im Betrieb eine sichere und haltbare Verbindung mit den Transportelementen eingehen. Auf diese Weise wird eine einfache Anpassung der Trennvorrichtung an unterschiedliche Wurstkaliber oder auch Hüllenmaterialien ermöglicht und auch im Falle eines Verschleißes ein einfacher Austausch der Crimpelemente ermöglicht.

Gemäß einer bevorzugten Ausführungsform weist der gewölbte Bereich eine Dicke, in Transportrichtung betrachtet, von 5 mm bis 20 mm auf sowie eine Höhe, senkrecht zur Transportrichtung betrachtet, von insbesondere 60 mm auf.

Der Dickenbereich des gewölbten Bereiches hat sich als besonders geeignet erwiesen, die runde bzw. nahezu runde Ausformung der Portionsenden zu fördern. Die betreffende Dicke ist derart zu verstehen, dass die Wölbung, insbesondere die konvexe Wölbung, die betreffende Dicke in Richtung der Transportrichtung bzw. entgegen der Transportrichtung, je nach Ausrichtung derCrimpelemente, aufweist, und sich die Wölbung insbesondere über den vollständigen Dickenbereich des Crimpelementes erstreckt.

Die Erfindung wird dadurch weitergebildet, dass der Öffnungswinkel zwischen den Schenkeln 15 ° bis 120 ° beträgt. Durch den oben genannten Öffnungswinkelbereich wird zum einen sichergestellt, dass die Wurstportionen sicher abgetrennt werden und zum anderen die Verdrängung der Wurstmasse erleichtert.

Die Erfindung ist vorstehend unter Bezugnahme auf eine Trennvorrichtung beschrieben worden. In einem weiteren Aspekt betrifft die Erfindung ein Crimpelement für eine Trennvorrichtung zum Trennen von Portionen aus mit Lebensmittel-Masse befüllten, länglichen Hüllen, insbesondere von Würstchen aus mit Wurstbrät gefüllten Alginat-Hüllen, welches einen Befestigungsabschnitt zum Befestigen an einem bewegbaren Transportelement aufweist und einen benachbart zu dem Befestigungsabschnitt angeordneten Crimpabschnitt, wobei der Crimpabschnitt zwei sich ausgehend von einem Grundabschnitt öffnende Schenkel aufweist.

Die Erfindung löst die eingangs bezeichnete Aufgabe in Bezug auf das Crimpelement, indem die Schenkel auf ihrer im Betrieb einem benachbart angeordneten zweiten Crimpelement abgewandten Seite gewölbt ausgebildet sind, sodass die gefüllte Hülle unter Verdrängung der Masse in einem Einschnürbereich zunächst eingeschnürt und anschließend durchtrennt wird.

Vorzugsweise ist das Crimpelement gemäß mindestens einem der kennzeichnenden Merkmale der vorstehenden Ausführungsbeispiele ausgebildet. Das Crimpelement macht sich somit die gleichen Vorteile und bevorzugten Ausführungsformen zunutze, wie die erfindungsgemäße Trennvorrichtung und umgekehrt. Diesbezüglich wird auf die obigen Ausführungen verwiesen und deren Inhalt und deren Inhalt hier mit einbezogen.

In einem weiteren Aspekt betrifft die Trennvorrichtung ein Verfahren zum Trennen und Ausbilden von Portionen aus mit Lebensmittel-Masse befüllten länglichen Hüllen, insbesondere von Würstchen aus mit Wurstbrät gefüllten Alginat-Hüllen, bei dem Lebensmittel-Masse mittels einer Füllmaschine in die zu befüllende Hülle eingefüllt, die befüllte Hülle mittels einer Trennvorrichtung in eine Transportrichtung transportiert wird, wobei die befüllte Hülle zwischen zwei antreibbare, umlaufende Transportelemente gebracht und mittels zweier benachbart angeordneter, jeweils an einem Transportelement angeordneter Crimpelemente in einem Einschnürbereich eingeschnürt und abgetrennt wird. Die Trennvorrichtung wird so eingesetzt, indem die Crimpelemente derart gewölbt ausgebildet sind, dass die Masse über die zu erzeugende Würstchenform hinaus verdrängt wird, sodass es sich nach dem Entspannen bzw. Rückströmen der Masse eine runde Form an den Enden der Wurst ausbildet. Die Erfindung wird dadurch weitergebildet, dass die Trennvorrichtung nach einem der vorstehenden Ausführungsbeispielen ausgebildet ist. Das Verfahren macht sich die gleichen Vorteile und bevorzugten Ausführungsformen zunutze, wie die erfindungsgemäße Trennvorrichtung und das Erfindungsgemäße Crimpelement und umgekehrt. Diesbezüglich wird auf die obigen Ausführungen verwiesen und deren Inhalt hier mit einbezogen.

Die Erfindung wird nachstehend anhand von Ausführungsbeispielen unter Bezugnahme auf die Figuren näher erläutert, es zeigen:
- Figur 1: eine Anordnung zum Herstellen von Portionen aus einer mit Lebensmittel-Masse gefüllten Hülle umfassend eine Füllmaschine und eine Portioniervorrichtung (Precrimpvorrichtung) sowie auch eine Trennvorrichtung (crimpvorrichtung) in einer Seitenansicht,
- Figur 2: ein Teil der Portioniervorrichtung in einer Seitenansicht,
- Figur 3: eine Seitenansicht der Portioniervorrichtung mit zwei beabstandeten Transportelementen und Crimpelementen,
- Figur 4: ein Crimpelement in perspektivischer Ansicht,
- Figur 5: das Crimpelement in Ansicht auf den Funktionsbereich,
- Figur 6: das Crimpelement in Seitenansicht,
- Figur 7: ein alternatives Ausführungsbeispiel eines Crimpelements als Gegenstück in perspektivischer Ansicht,
- Figur 8: das Crimpelement aus Fig. 7 in Ansicht auf des Funktionsbereich,
- Figur 9: das Crimpelement aus Fig. 7 in Seitenansicht,
- Figur 10: ein alternatives Ausführungsbeispiel eines Crimpelements in schematischer Ansicht,
- Figur 11: ein alternatives Ausführungsbeispiel eines Crimpelements in schematischer Ansicht,
- Figur 12: ein alternatives Ausführungsbeispiel eines Crimpelements in schematischer Ansicht,
- Figur 13: eine andere perspektivische Ansicht der Portioniervorrichtung mit zwei beabstandeten Transportelementen und Crimpelementen im Betrieb sowie mit Ansichten portionierter Würstchen,
- Figur 14: eine perspektivische Ansicht portionierter Würstchen,
- Figur 15: portionierte Würstchen in stirnseitiger Ansicht,
- Figur 16: portionierte Würstchen in Draufsicht und
- Figuren: 17-19 gemäß dem Stand der Technik hergestellte portionierte Würstchen in drei Ansichten;

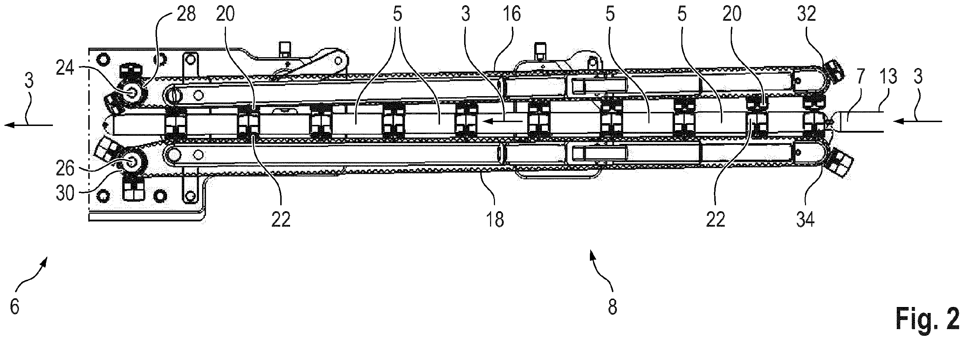

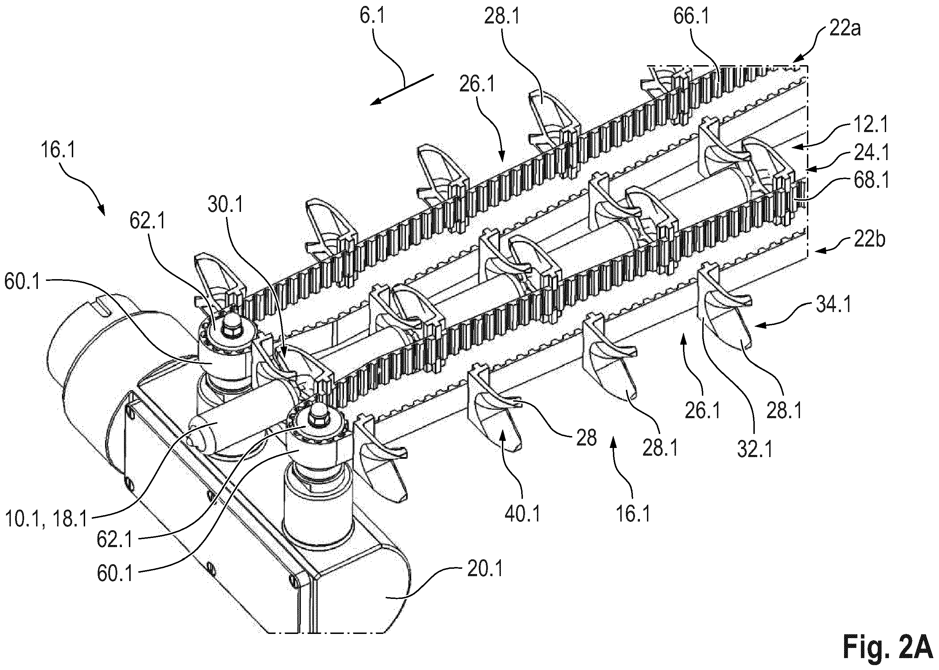

- Figur 2A: eine erfindungsgemäße Trennvorrichtung in einer perspektivischen Ansicht;
- Figuren: 3A-5A detaillierte Ansichten der erfindungsgemäßen Trennvorrichtung in unterschiedlichen Betriebszuständen in perspektivischen Ansichten;

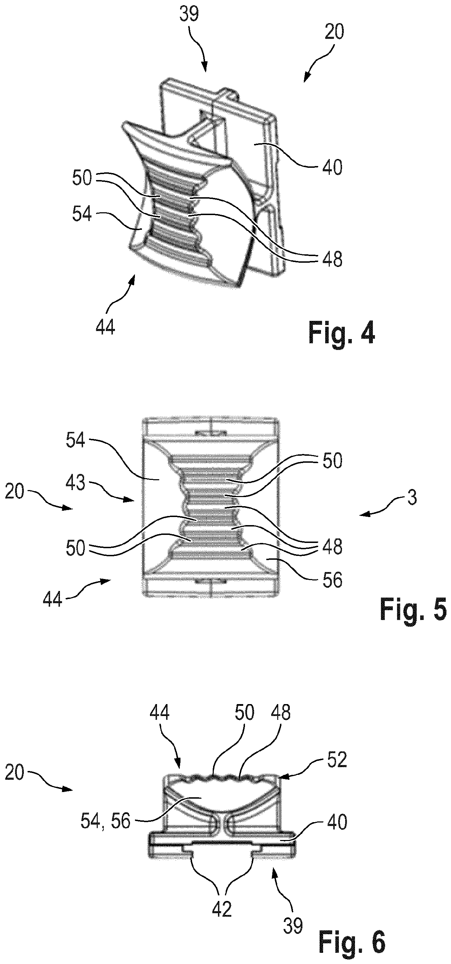

- Figur 6Aa,6Ab: Würstchen-Portionen, welche durch die erfindungsgemäße Trennvorrichtung ausgebildet werden, in Seitenansichten;
- Figuren: 7A-9A erfindungsgemäße Crimpelemente in unterschiedlichen Ansichten.

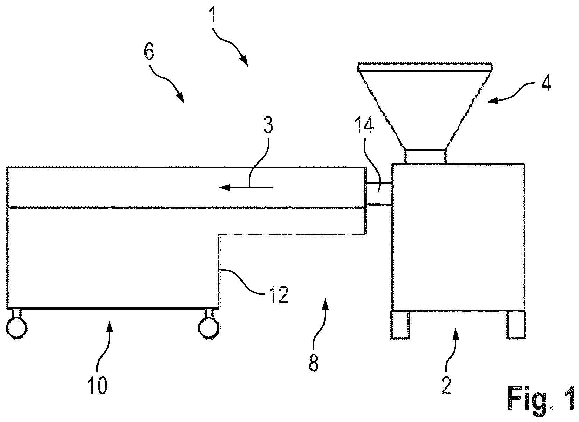

Fig. 1 zeigt eine Anordnung 1 zum Herstellen zum Herstellen von Portionen aus einer mit Masse, insbesondere pastöser Lebensmittel-Masse, gefüllten Hülle. Die Lebensmittel-Masse ist vorzugsweise Wurstbrät zum Herstellen von Würstchen 5, wie in Fig. 2 gezeigt. Die Hülle ist vorzugsweise aus zunächst flüssigem, sich verfestigendem Alginat gebildet, welches zusammen mit der zu einem Strang geformten Lebensmittel-Masse coextrudiert wird. Die Anordnung 1 umfasst eine Füllmaschine 2 mit einem Fülltrichter 4 zum Aufnehmen der Lebensmittel-Masse und mit einer nicht gezeigten Förderpumpe, einem Füllrohr zum Einfüllen der Lebensmittel-Masse in die zu füllende Hülle oder einer Co-Extrudienseinrichtung zum Corextrudieren der Masse und Alginat oder dergleichen. Die Anordnung 1 umfasst ferner eine Portioniervorrichtung 6 sowie eine Steuerung, welche vorzugsweise in der Füllmaschine 2 ausgebildet ist.

Die Portioniervorrichtung 6 umfasst vorzugsweise gemäß Ausführungsbeispiel eine Pre-Crimpvorrichtung 8 und eine nachgeordnete Crimpvorrichtung 10, wobei beide Crimpvorrichtungen 8, 10 auf einem Maschinengestell 12 angeordnet sind. Zwischen Füllmaschine 2 und Portioniervorrichtung 6 ist eine Coextrusionseinrichtung 14 angeordnet. In an sich bekannter Weise dient diese dazu, einen Wurst-Strang 7 aus Wurstbrät und einer äußeren Wurst-Hülle 13 aus Alginat zu extrudieren, welches zunächst flüssig ist und sich verfestigt, um eine leicht elastische Hülle 13 des Wurst-Strangs 7 zu bilden.

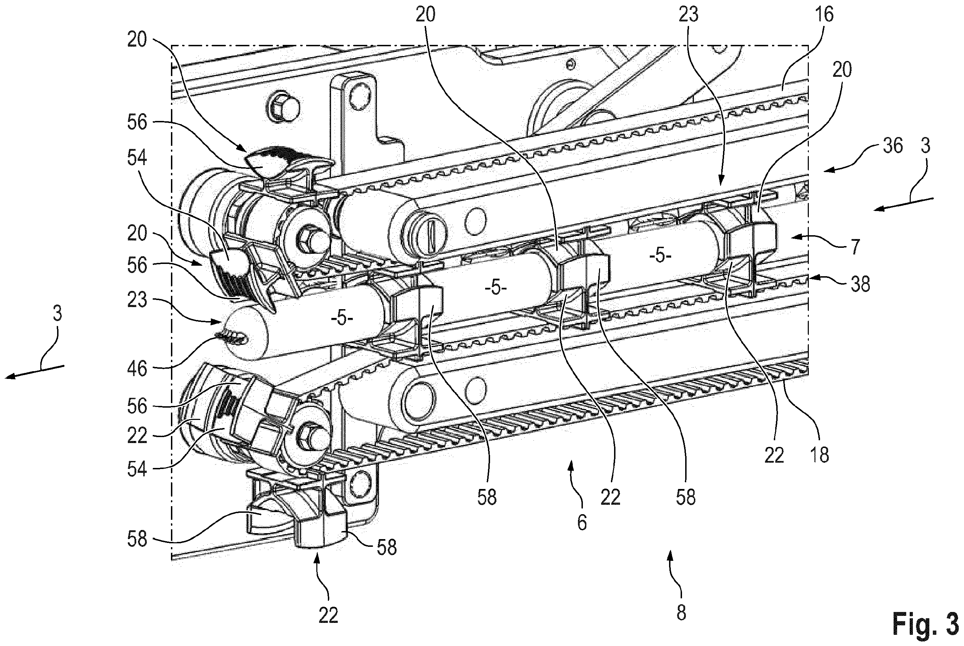

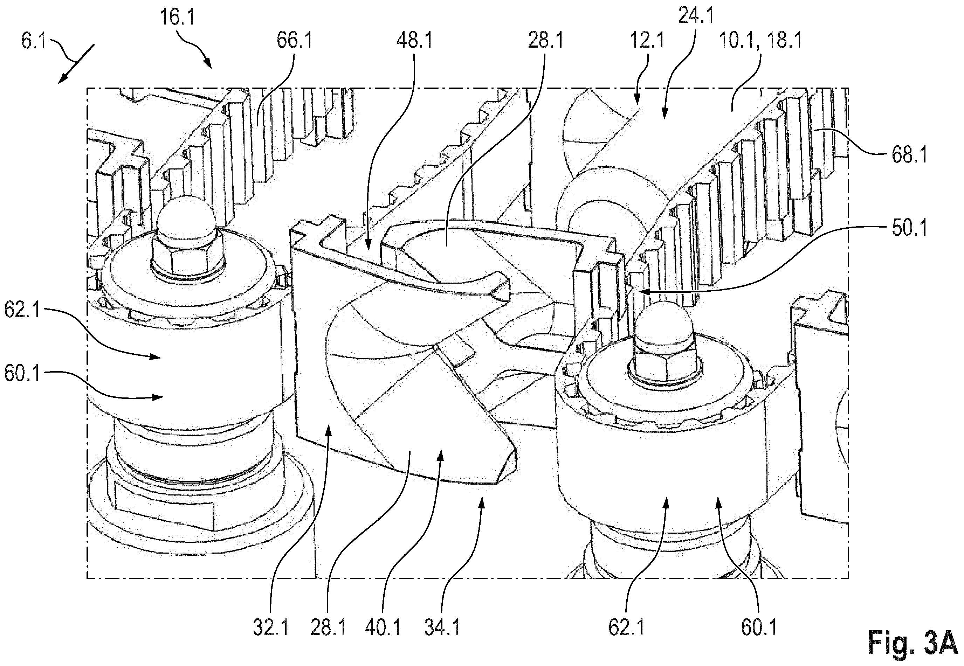

Wie in Figur 1, 2 und 3 gezeigt, wird im Betrieb ein co-extrudierter Wurst-Strang 7 aus Hülle 13 und Wurstbrät in Transportrichtung 3 transportiert und von der Portioniervorrichtung 6 aufgenommen und weiterverarbeitet und werden insbesondere längenportionierte einzelne Würstchen 5 oder ähnliche Lebensmittelprodukte erzeugt. Die in Figur 2 und 3 als Seitenansicht gezeigte Pre-Crimpvorrichtung 8 ist Teil der Portioniervorrichtung 6 und in Transportrichtung 3 stromabwärts von der Coextrusionseinrichtung 14 (Fig. 1) angeordnet, um den Wurst-Strang 7 aufzunehmen, ihn weiter in Transportrichtung 3 zu transportieren und durch Crimpen in einzelne Portionen oder Würstchen 5 zu unterteilen.

Die in Figur 1, 2, 3 und 13 gezeigte Portioniervorrichtung 6 mit Pre-Crimpvorrichtung 8 umfasst zwei Transportelemente 16, 18, die aus einem flexiblem Material oder alternativ als Kette ausgebildet sind. Die Transportelemente 16, 18 sind bevorzugt als umlaufender Zahnriemen ausgebildet, wie in Figur 2 und Figur 3 gut erkennbar ist. Mehrere Crimpelemente 20, 22 sind vorzugsweise mittels formschlüssiger Schnapp-Verbindung oder Schraub- oder Nietverbindung mit den Transportelementen 16, 18 gekoppelt. Die Crimpelemente 20, 22 stehen seitlich von dem jeweiligen Transportelement 16, 18 ab und weisen eine Form und Abstand auf, so dass im Betrieb gegenüberliegende, kooperierende Crimpelemente 20, 22 derart auf die im Wesentlichen zylindrische Kontur des Wurst-Strangs 7 einwirken, dass sich im Wurst-Strang 7 Einschnürbereiche 23 ausbilden und die Würstchen 5 gebildet werden während des Transportes in Transportrichtung 3. Die Portioniervorrichtung 6 weist einen nicht näher gezeigten Antrieb, insbesondere als Elektromotor ausgebildet, eine erste Antriebs-Welle 24 und eine zweite Antriebs-Welle 26 und die beiden Wellen 24, 26 koppelnde nicht gezeigte Zahnräder auf, sodass die beiden Wellen 24, 26 synchron und gegenläufig angetrieben werden von dem Antrieb. Die Wellen 24, 26 weisen an ihrem oberen Ende jeweils ein Zahnrad 28, 30 auf, welche die Transportelemente 16, 18 antreiben. Mittels weiterer Zahnräder 32, 34 sind die Transportelemente 16, 18 zusätzlich gelagert und geführt. In an sich bekannter und nicht im Detail gezeigter Weise sind sämtliche Komponenten der Portioniereinrichtung 6 an einem Maschinen-Gestell, welches mehrere Abschnitte wie Montageplatten aufweisen kann, befestigt.

Jedes Transportelement 16, 18 weist einen Transportbereich 36, 38 auf, in dem die Komponenten im Betrieb mit dem Wurst-Strang 7 im Wesentlichen in Transportrichtung 3 bewegt werden, einen ersten Umlenkbereich im Bereich der Zahnräder 32, 34 und einen zweiten in Transportrichtung 3 beabstandeten Umlenkbereich im Bereich der Zahnräder 28, 30 auf. Des Weiteren hat jedes Transportelement 16, 18 jeweils einen Rücklaufbereich, in welchem die Abschnitte der Transportelemente 16, 18 entgegen der Transportrichtung 3 bewegt werden. Die Transportelemente 16, 18 sind so beabstandet zueinander angeordnet, dass die gefüllte Hülle bzw. der Wurst-Strang 7 und die sich bildenden Würstchen 5 in den Zwischenraum zwischen den Transportelementen 16, 18 mit den Crimpelementen 20, 22 gelangen und geführt in Transportrichtung 3 transportiert werden können.

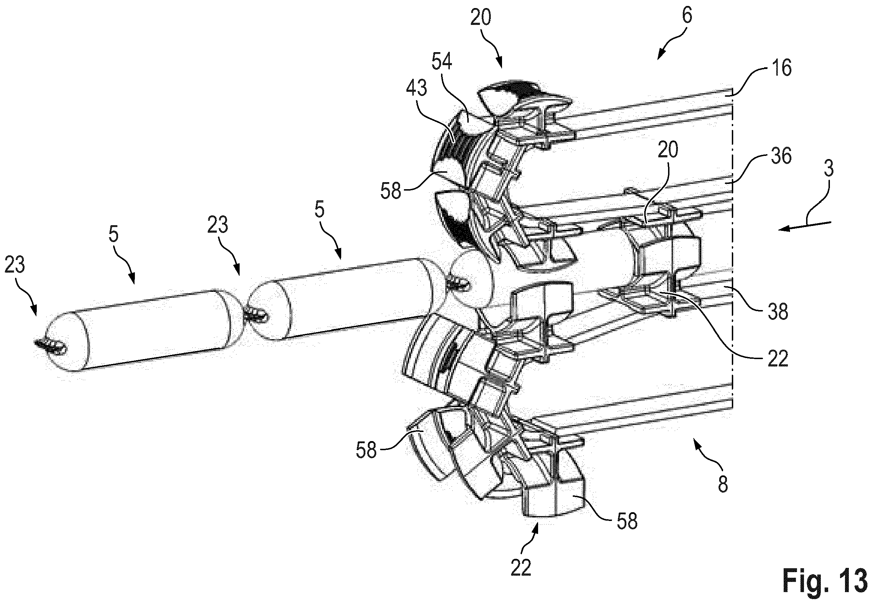

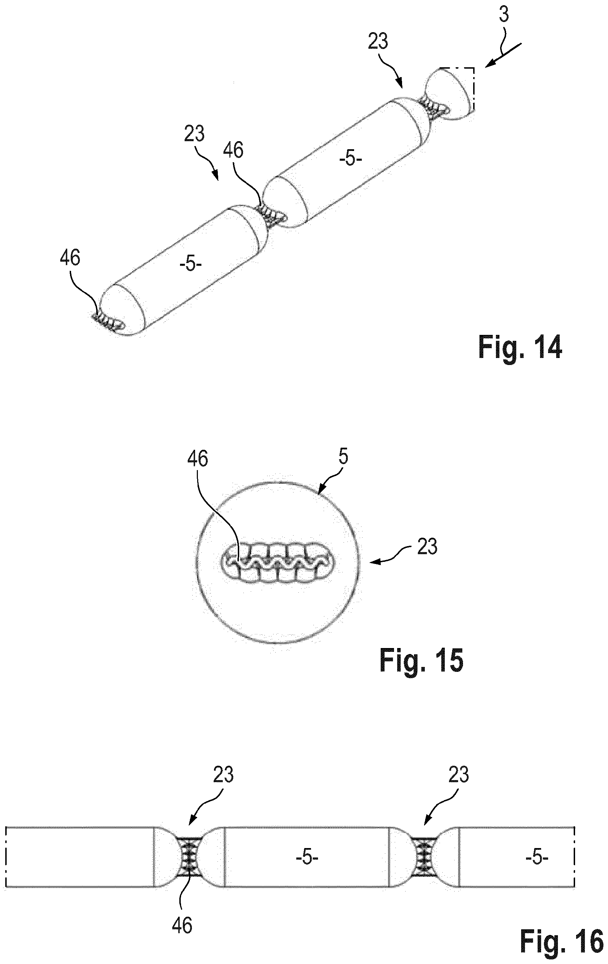

Wie die Figuren 2 und 3 gut veranschaulichen, sind in bestimmten Abständen zueinander, welche in etwa der Länge eines Würstchens 5 entsprechen, seitlich von den Transportelementen 16, 18 abstehende Crimpelemente 20, 22 so angeordnet, dass immer zwei synchron angetriebene und im Umlenkbereich und Transportbereich 36,38 sich im Wesentlichen gegenüberliegende Crimpelemente 20, 22 so zusammenwirken können, dass sie im Umlenkbereich sich in Richtung auf den Wurst-Strang 7 bewegen und mit diesem in Kontakt kommen und die Einschnürstelle oder den Einschnürbereich 23 ausbilden bzw. beginnen auszubilden, welcher auch in den Figuren 13,14, 15 und 16 gut erkennbar ist.

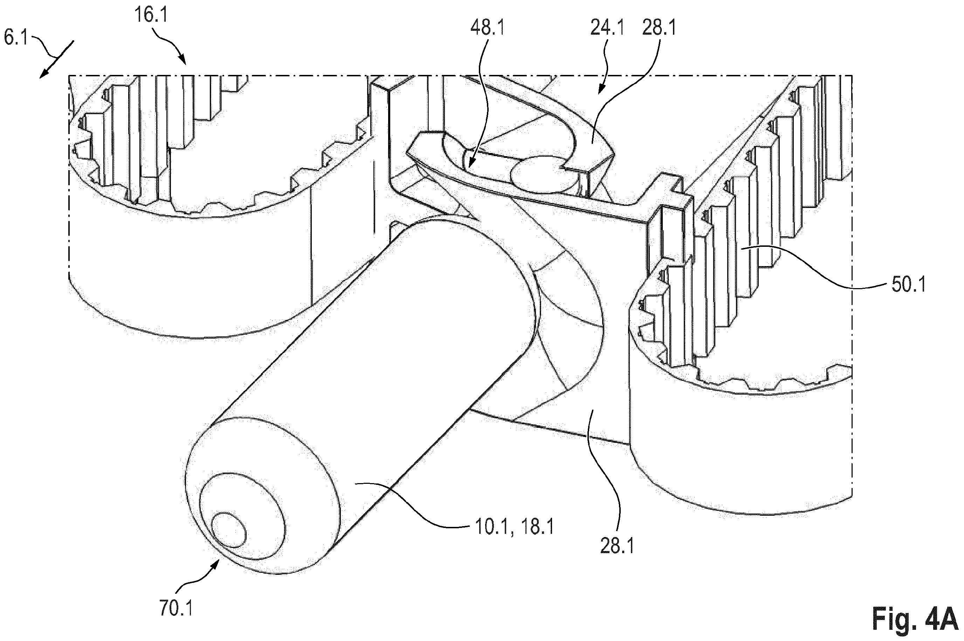

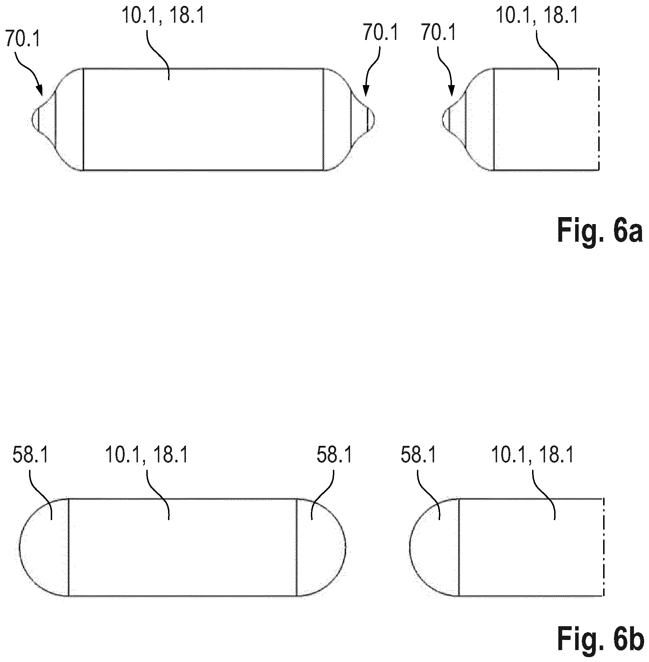

Wie die Figuren 4 bis 9 veranschaulichen, weist jedes Crimpelement 20, 22 an seinem Befestigungsbereich 39 bevorzugt einen im Wesentlichen plattenförmigen, quaderförmigen Befestigungsabschnitt 40 auf, welcher dazu dient, jedes Crimpelement 20, 22 an dem Transportelement 16, 18 zu befestigen. Hierzu kann der Befestigungsabschnitt 52 auf seiner Rückseite (Figur 6) zwei Vorsprünge 42 aufweisen, die mit dem Transportelement 16, 18 kooperieren können, beispielsweise eine Art Schnappverbindung bilden. Es können auch andere Befestigungsmittel wie Schrauben oder Nieten oder Klebstoff verwendet werden.

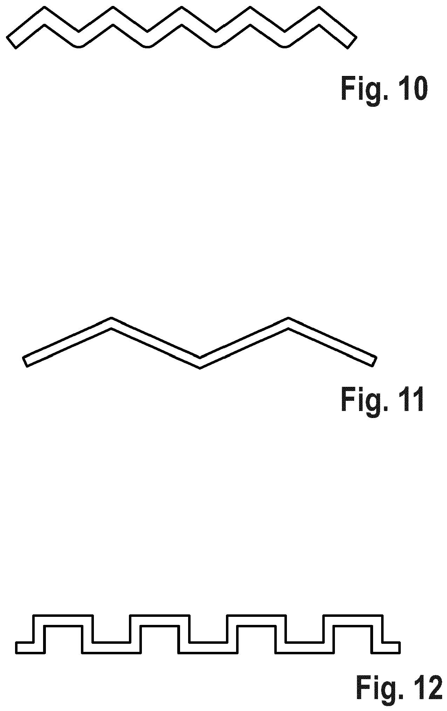

Wie Figuren 3-9 veranschaulichen, weist vorzugsweise jedes der Crimpelemente 20, 22 auf seiner im Transportbereich 36, 38 einem gegenüberliegenden Crimpelement 20, 22 wenigstens teilweise zugewandten Funktionsbereich 44 eine solche Form auf, dass in dem Einschnürbereich 23 eines Würstchens im Bereich der Wurst-Hülle 13 Wellen, Knicke, und/oder Falten 46 ausgebildet werden, die auch in den Figuren 10-12 sowie 14-16 gezeigt sind. Diese Wellen, Knicke und/oder Falten46 erstrecken sich insbesondere im Wesentlichen parallel zur Transportrichtung 3, welcher parallel zur Längsachse der Würstchen 5 verläuft.

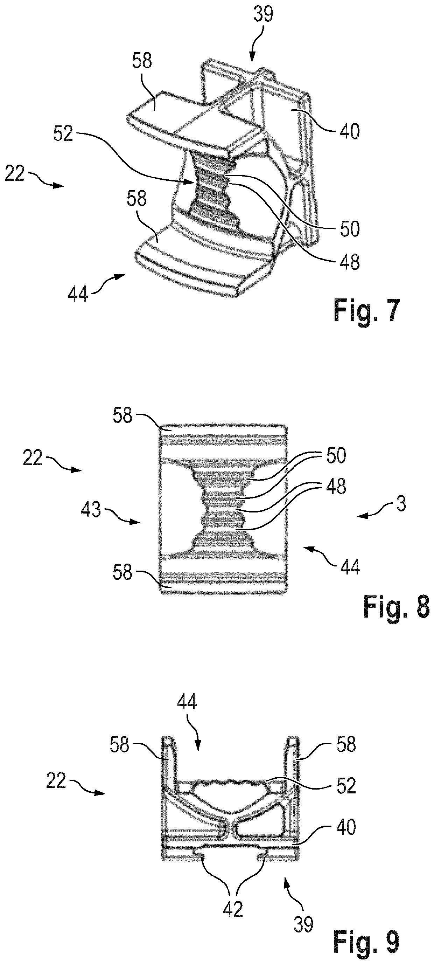

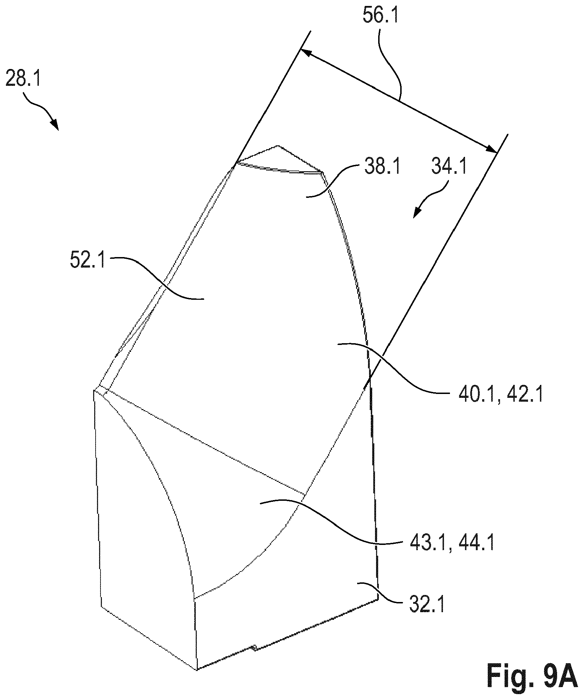

Wie Figuren 4-9 veranschaulichen, weist vorzugsweise jedes Crimpelement 20, 22 an dem Funktionsbereich 44 wenigstens teilweise Vertiefungen 48 und/oder Vorsprünge 50 auf. Die Vertiefungen 48 und/oder Vorsprünge 50 sind vorzugsweise im Wesentlichen in einem mittleren Bereich 43 des Funktionsbereichs 44 angeordnet. Wie beispielsweise den Figuren 6 und 9 entnehmbar ist, sind die Vertiefungen 48 und/oder Vorsprünge 50 wenigstens teilweise innerhalb eines im Wesentlichen ebenen Abschnitts 52 der Oberfläche angeordnet sind, in welchem die Vertiefungen 48 und/oder Vorsprünge 50 ausgebildet sind. Die Längen der Vertiefungen 48 und/oder Vorsprünge 50 an einem Crimpelement 20, 22 sind wenigstens teilweise verschieden, vorzugsweise nimmt die Länge der Vertiefungen 48 und/oder Vorsprünge 50 von einem mittleren Bereich nach außen zu. Die Länge wird hier im Ausführungsbeispiel im Betrieb in Transportrichtung 3 verstanden.

Im Betrieb sind jeweils gegenüberliegend angeordnete Crimpelemente 20, 22 an ihrem dem gegenüberliegenden Crimpelement 20, 22 zugewandten Funktionsbereich 44 konform ausgebildet und so angeordnet an den Transportelementen 16, 18 angeordnet, dass eine Vertiefung 48 des einen Crimpelementes 20 gegenüber von einem Vorsprung 50 des anderen, gegenüberliegenden Crimpelementes 22 angeordnet ist und/oder ein Vorsprung 50 des einen Crimpelementes 22 wenigstens teilweise in eine Vertiefung 48 des gegenüberliegenden anderen Crimpelementes 20 eintaucht und die dazwischenliegende Wurst-Hülle 13 dementsprechend im Einschnürbereich 23 zum einen abgeflacht wird aufgrund des im Wesentlichen ebenen Abschnitts 52 und gleichzeitig etwas gewellt, gefaltet, und/oder geknickt wird aufgrund der Vertiefungen 48 und/oder Vorsprünge 50 unter Ausbildung von Wellen, Knicke und/oder Falten 46.

Wie ebenfalls den Figuren 3-9 entnehmbar ist, ist vorzugsweise jeweils an einem Crimpelement 20, 22 benachbart von dem mittleren Bereich 43 eine erste, in Transportrichtung 3 vordere, wenigstens teilweise im Wesentlichen in einem Winkel zum mittleren Bereich angeordnete Flankenfläche 54 und/oder eine zweite, in Transportrichtung 3 hintere wenigstens teilweise im Wesentlichen in einem Winkel zum mittleren Bereich 43 angeordnete zweite Flankenfläche 56 ausgebildet. Die erste Flankenfläche 54 und/oder zweite Flankenfläche 56 weist vorzugsweise wenigstens teilweise eine konkave Form auf. Auch andere Formen sind möglich. Die erste und/oder zweite Flankenfläche 54, 56 können eine im Wesentlichen kugelförmige, elliptische, parabelförmige oder ähnlich gekrümmte konkave Form aufweisen, sodass sich durch das Zusammenwirken gegenüberliegend angeordneter Crimpelemente 20, 22 im Wesentlichen ein halbkugelförmig, elliptisches oder parabelförmiges Wurstende einer Würstchen-Portion 5 ausbildet, wie dies insbesondere auch den Figuren 3, 14, 15 und 16 entnehmbar ist; dort ist im Wesentlichen eine Halbkugelform gezeigt.

Crimpelemente 22 sind mit vorzugsweise plattenförmigen Führungselementen 58 wie insbesondere den Figuren 3 sowie 7-9 gut entnehmbar ist. Die Führungselemente 58 sind beabstandet zueinander in äußeren Bereichen in Relation zu den mittleren Bereichen 43, welche vorzugsweise Vertiefungen 48 und /oder Vorsprünge 50 aufweisen, angeordnet und haben vorzugsweise einen solchen Abstand zueinander, dass das im Betrieb im Transportbereich 36, 38 gegenüberliegend angeordnete Crimpelement 20 (siehe Figuren 4-6) von den Führungselementen 58 wenigstens teilweise beidseitig umgriffen wird. Die gefüllte Wurst-Hülle 13 wird so umgriffen und davor geschützt, zu platzen während der Ausformung.

Wie die Figuren 4-9 zeigen, bilden die Vertiefungen 48 und/oder Vorsprünge 50 im Wesentlichen in einer Seitenansicht eine Wellenform.

Wie die Figuren 10, 11 und 12 als alternative Ausführungsformen der Crimpelemente 20, 22 zeigen, können die Vertiefungen 48 und/oder Vorsprünge 50 auch eine Dreieckswellenform (Fig. 10) mit spitzeren Winkeln, eine Dreieckswellenform (Fig. 10) mit weniger spitzen Winkeln (Fig. 11) Rechteckwellenform (Fig. 12), oder nicht gezeigte geschwungene Wellenformen, Sinuswellenformen oder ähnlich aufweisen.

Weitere Merkmale und der Betrieb der erfindungsgemäßen Anordnung 1 und Portioniervorrichtung 6 und auch das Verfahren zum Herstellen von Portionen und weitere vorteilhafte Merkmale werden aus dem nachfolgenden Beschreibungen ersichtlich: (Lebensmittel-) Masse wie Wurstbrät wird aus dem Fülltrichter 4 der Füllmaschine 2 mittels der Förderpumpe gefördert und in die Hülle eingefüllt. Die Förderung kann vorzugsweise kontinuierlich oder alternativ auch diskontinuierlich erfolgen.

Mittels der Füllmaschine 2 wird ein Strang aus Lebensmittel-Masse, insbesondere Wurstbrät zusammen mit einer zunächst flüssigen und dann verfestigten Alginat-Hülle in der Coextrusionseinrichtung 14 extrudiert (Fig. 1), sodass ein Wurst-Strang 7 entsteht (Fig. 2, 3, 13). Die befüllte Wurst-Hülle 13 wird zu der Portioniervorrichtung 6 mit Pre-Crimpvorrichtung 8 transportiert, die gleichzeitig eine Transportrichtung zum Weiteren fördern in Transportrichtung 3 bildet. Die befüllte Hülle 13 gelangt in den Bereich zwischen die zwei antreibbaren, umlaufenden Transportelemente 16, 18 gebracht und wird mittels zweier gegenüberliegend angeordneter, jeweils an einem Transportelement 16, 18 angeordneter Crimpelemente 20, 22 in dem Einschnürbereich 23 eingeschnürt. Wie auch zuvor anhand der Anordnung 1 und der Crimpelemente 20, 22 genau beschrieben, werden im Betrieb aufgrund der Form und Anordnung der gegenüberliegenden Crimpelemente 20, 22 in dem Einschnürbereich 23 der Wust-Hülle 13 Wellen, Knicke und/oder Falten ausgebildet, welche sich insbesondere im Wesentlichen parallel zur Transportrichtung 3 erstrecken.

Der so hergestellte und portionierte, in einzelne Würstchen 5 unterteilte Wurst-Strang 7 wird dann weiter transportiert zu der nicht näher dargestellten Crimpvorrichtung 10, in welcher die zunächst noch zusammenhängenden Würstchen 5 (siehe beispielsweise Figur 13 oder 14 oder 16, durch Crimpelemente oder Trennelemente, beispielsweise messerartige zusammenwirkende Trennelements, vollständig getrennt werden in der Mitte der jeweiligen Einschnürbereiche, sodass dann vollständig separierte Würstchen 5 gebildet werden, die weiter in Transportrichtung 3 transportiert und dann beispielsweise in Verpackungen gebracht werden können.

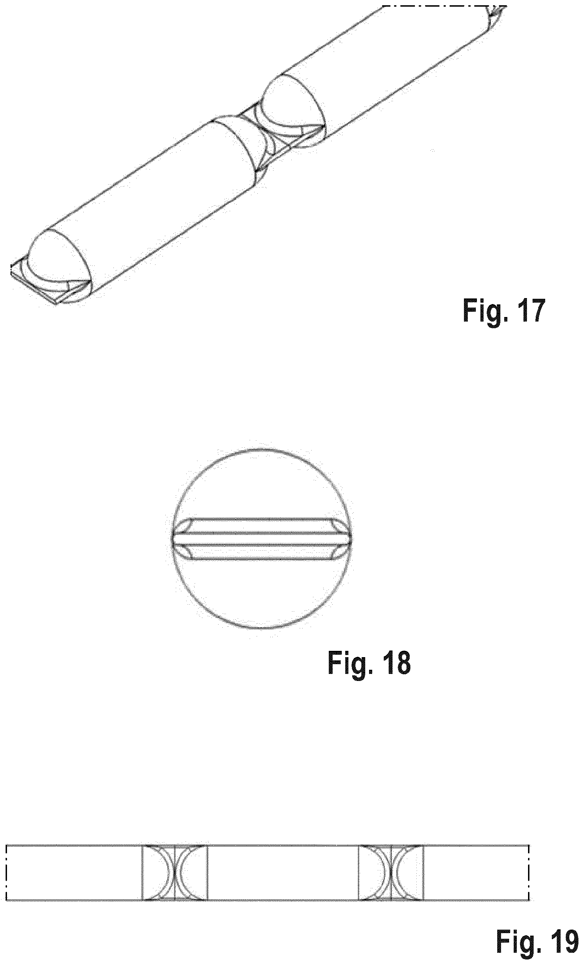

Figuren 17-19 veranschaulichen gemäß dem Stand der Technik erzeugte Würstchen 5 mit im Wesentlichen glatten Einschnürbereichen ohne Wellen oder dergleichen

Die Trenn- bzw. Crimpvorrichtung 10 (Fig. 1), welche Teil der Anordnung 1 ist, ist nachfolgend weiter anhand der Fig. 2A-9A beschrieben, wobei die beschriebenen Merkmale einzeln oder in beliebiger Kombination mit der Anordnung 1 kombinierbar sind:
Die Trennvorrichtung 16.1 ist dazu ausgebildet, Würstchen-Portionen 10.1 aus dem Wurststrang 12.1 auszubilden. Die Trennvorrichtung 16.1 weist zwei beabstandet zueinander angeordnete umlaufende Transportelemente 22a, 22b auf. Die Transportelemente 22a, 22b sind mittels eines Antriebs 20.1 antreibbar. Die Transportelemente 22a, 22b weisen jeweils einen Transportbereich 24.1 auf, welcher im Betrieb in eine Transportrichtung 6.1 bewegt wird. Die umlaufenden Transportelemente 22a, 22b weisen darüber hinaus einen Rücklaufbereich 26.1 auf. Gefüllte Hüllen 18 werden zwischen die Transportbereiche 24 der beiden Transportelemente 22a, 22b eingebracht und in Transportrichtung 6.1 transportiert. Die Transportelemente 22a, 22b sind derart ausgerichtet, dass sich der Abstand zwischen den Transportelementen 22a, 22b in dem Transportbereich 24.1 in Richtung der Transportrichtung 6 reduziert.

An jedem der Transportelemente 22a, 22b sind seitlich abstehend von dem Transportelement 22a, 22b Crimpelemente 28.1 angeordnet. Jeweils zwei Crimpelemente 28.1 von jeweils einem der Transportelemente 22a, 22b sind dabei nebeneinander angeordnet. Aufgrund der Ausrichtung der Transportelemente 22a, 22b relativ zueinander bewegen sich die Crimpelemente 28.1 aufeinander zu, wenn die Transportelemente 22a, 22b in Transportrichtung 6.1 bewegt werden. Mit anderen Worten werden die Crimpelemente 28.1 parallel zueinander aufeinander zu und teilweise aneinander vorbei bewegt, wenn sich die Transportelemente 22a, 22b in Transportrichtung 6.1 bewegen.

Die Crimpelemente 28.1 weisen jeweils einen Befestigungsabschnitt 32.1 zum Befestigen der Crimpelemente 28.1 an dem Transportelement 22a, 22b auf. Benachbart zu dem Befestigungsabschnitt 32.1 ist ein Crimpabschnitt 34.1 angeordnet. Die Crimpelemente 28.1 sind auf einer dem jeweilig benachbart angeordneten Crimpelement 28.1 abgewandten Seite mit einer Wölbung 40.1 versehen. Hierdurch wird die gefüllte Hülle 18.1 unter Verdrängung der Füllmasse in einem Einschnürbereich 30.1 zunächst eingeschnürt und anschließend durchtrennt.

Die Crimpelemente 28.1 sind derart relativ zu den Transportelementen 22a, 22b ausgerichtet, dass die Crimpelemente 28.1 in dem Transportbereich 24.1 aneinander angrenzend und parallel zueinander geführt werden. Die Transportelemente 22a, 22b weisen jeweils ein Transportband 66.1, 68.1 auf. Die Transportbänder 66.1, 68.1 werden über einen Zahnriemenantrieb 62.1 angetrieben. Zwischen dem Transportbereich 24.1 und dem Rücklaufbereich 26.1 befindet sich ein Umlenkbereich 60.1.

Figur 3A zeigt eine Detailansicht der Trennvorrichtung 16.1. Wie bereits unter Bezugnahme auf Figur 2A beschrieben worden ist, werden die Transportbänder 66.1, 68.1 jeweils mittels eines Zahnriemenantriebs 62.1 angetrieben. Die in Figur 3A sichtbaren Zahnriemenantriebe 62.1 sind im Bereich des Umlenkbereiches 60.1 angeordnet. Die Transportbänder 66.1, 68.1 weisen Aufnahmemittel 50.1 auf, in denen Crimpelemente 28.1, insbesondere Befestigungsabschnitt 32.1 der Crimpelemente 28.1, angeordnet sind.

In dem in der Figur 3A gezeigten Zustand sind die gegenüberliegend und benachbart zueinander geführten Crimpelemente 28.1 bereits derart relativ zueinander verschoben worden, dass zwischen den benachbarten Crimpelemente 28.1 lediglich ein reduzierter, hier rautenförmiger offener Querschnitt verbleibt. Durch den offenen Querschnitt erstreckt sich im Betrieb der Einschnürbereich 30.1 der Würstchen-Portion 10.1, was hier allerdings nicht dargestellt ist.

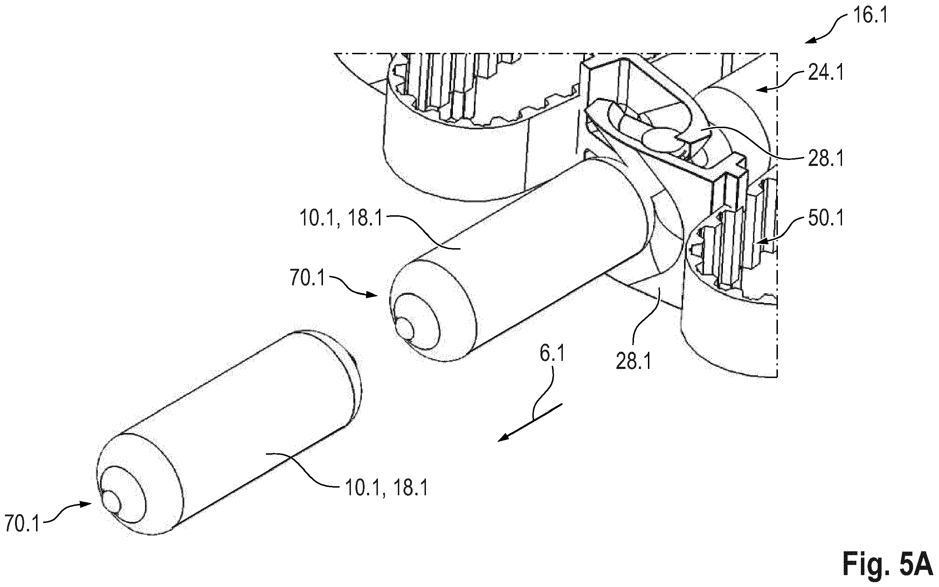

Durch die fortschreitende Bewegung der Crimpelemente 28.1 weiter in Richtung der Transportrichtung 6.1 werden die Crimpelemente 28.1 weiter relativ zueinander in Richtung des jeweils schräg gegenüberliegenden Crimpelementes 28.1 bewegt, wodurch der freie Querschnitt weiter reduziert wird, und schließlich ein Abtrennen der Würstchen-Portion 10.1 erfolgt. Ein solcher Zustand kurz vor dem Abtrennen der Würstchen-Portion 10.1 ist in Figur 4A gezeigt. Aus Figur 4A ist darüber hinaus erkennbar, dass die Würstchen-Portion 10.1 durch die Form des hier im Vordergrund angeordneten Crimpelementes 28.1 über die zu erzeugende Form hinaus verdrängt wird. Dies hat zur Folge, dass sich zunächst ein sogenanntes felgenförmiges Wurstende 70.1 ausbildet. Zwei Würstchen-Portionen 10.1 mit derartigen felgenförmigen Wurstenden 70.1 sind in Figur 5A veranschaulicht.

Wie auch in Figur 6a dargestellt ist, bildet sich das betreffende felgenförmige Wurstende 70.1 unmittelbar nach dem Abtrennen der Würstchen-Portion 10.1 mittels des erfindungsgemäßen Crimpelements 28.1 aus. Das Würstchen 10.1 behält die in Figur 6a bzw. auch in den Figuren 4A und 5A gezeigten felgenförmigen Wurstenden 70.1 jedoch nicht bei, sondern es bildet sich nach einiger Zeit, insbesondere nach dem Entspannen bzw. Rückströmen der Masse innerhalb der Hülle 18.1 ein rundes Wurstende 58.1 aus. Mit anderen Worten wird durch die spezifische Form der Crimpelemente 28.1, welche eine erfindungsgemäße Wölbung 40.1 aufweisen, erreicht, dass die Wurstmasse zunächst über die zu erzeugende Form, nämlich die runde Form hinaus verdrängt wird, was schließlich nach Ausgleichsvorgängen innerhalb der Masse die Ausbildung der runden Wurstenden 58.1 zur Folge hat.

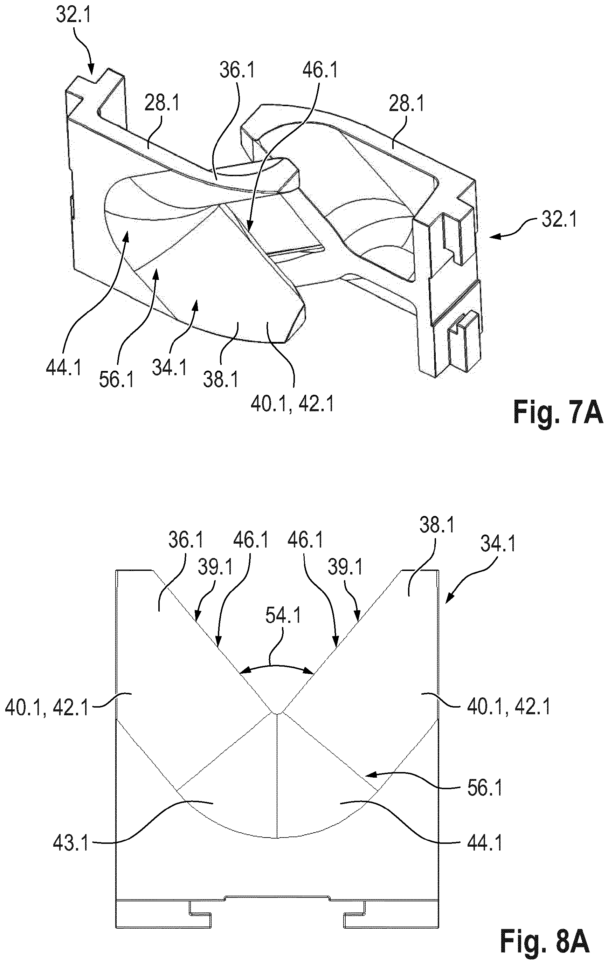

Erfindungsgemäße Crimpelemente 28.1 sind anhand der Figuren 7A bis 9A detailliert. Das Crimpelement 28.1 weist einen Befestigungsabschnitt 32.1 zum Befestigen des Crimpelements 28.1 an dem Transportelement 22a, 22b auf. Benachbart zu dem Befestigungsabschnitt 32.1 ist ein Crimpabschnitt 34.1 angeordnet. Der Crimpabschnitt 34.1 weist zwei sich ausgehend von einem Grundabschnitt 43.1 öffnende Schenkel 36.1, 38.1 auf. Die Schenkel 36.1, 38.1 sind auf ihrer im Betrieb einer dem benachbart angeordneten zweiten Crimpelement 28.1 abgewandten Seite mit einer Wölbung 40.1 versehen. Aufgrund der Wölbung 40.1 wird die gefüllte Hülle 18.1 unter Verdrängung der Masse in einem Einschnürbereich 30.1 zunächst eingeschnürt und anschließend durchtrennt. Die Wölbung 40.1 ist dabei als konvexe Wölbung 42.1 ausgebildet. Der Grundabschnitt 43.1 weist ebenfalls eine Wölbung auf, welche insbesondere als konvexe Wölbung ausgebildet ist.

Auf den Innenseiten der Schenkel 39.1 ist eine Schneide 46.1 ausgebildet. Der gewölbte Bereich 40.1 weist eine Dicke 52.1 in Transportrichtung 6.1 auf. Darüber hinaus weisen die Schenkel 36.1, 38.1 einen Öffnungswinkel 54.1 auf. Der Übergang 56.1 zwischen der Wölbung des Grundabschnitts 43.1 und der Wölbung 40.1 der Schenkel 36.1, 38.1 ist knickfrei ausgebildet.

Weitere bevorzugte Merkmale der Trennvorrichtung 16.1 sind nachfolgend anhand von Ausführungsbeispielen weiter erläutert:
1. Ausführungsbeispiel (16.1) zum Trennen von Portionen (10.1) aus mit Lebensmittel-Masse befüllten länglichen Hüllen (18.1), insbesondere von Würstchen-Portionen (10.1) aus mit Wurstbrät gefüllten Alginat-Hüllen (18.1),
   mit zwei beabstandet zueinander angeordneten, mittels mindestens eines Antriebs (20.1) antreibbaren umlaufenden Transportelementen (22a, 22b), die jeweils einen Transportbereich (24.1) aufweisen, welcher im Betrieb in eine Transportrichtung (6) bewegt wird, und einen Rücklaufbereich (26),
   wobei die gefüllte Hülle (18.1) zwischen die Transportbereiche (24.1) der beiden Transportelemente (22a, 22b) eingebracht und in Transportrichtung (6.1) transportiert werden kann,
   und wobei die Transportelemente (22a, 22b) derart ausgerichtet sind, dass sich der Abstand zwischen den Transportelementen (22a, 22b) in dem Transportbereich (24.1) in Richtung der Transportrichtung (6.1) reduziert,
   mindestens einem an jedem Transportelement (22a, 22b) angeordneten seitlich von dem Transportelement (22a, 22b) abstehenden Crimpelement (28.1),
   wobei zwei Crimpelemente der beabstandeten Transportelemente (22a, 22b) so geformt und im Transportbereich (24.1) nebeneinander angeordnet sind sowie bei Bewegung in die Transportrichtung (6.1) aufeinander zu bewegt werden,
   wobei das Crimpelement (28.1) einen Befestigungsabschnitt (32.1) zum Befestigen des Crimpelements (28.1) an dem Transportelement (22a, 22b) aufweist und einen benachbart zu dem Befestigungsabschnitt (32.1) angeordneten Crimpabschnitt (34.1),
   wobei der Crimpabschnitt (34.1) zwei sich ausgehend von einem Grundabschnitt (43.1) öffnende Schenkel (36.1, 38.1) aufweist,
   **dadurch gekennzeichnet**, dass die Schenkel (36.1, 38.1) auf ihrer im Betrieb einem benachbart angeordneten zweiten Crimpelement (28.1) abgewandten Seite gewölbt (40.1) ausgebildet sind, sodass die gefüllte Hülle (18.1) unter Verdrängung der Masse in einem Einschnürbereich (30.1) zunächst eingeschnürt und anschließend durchtrennt wird.
2. Ausführungsbeispiel (16.1) nach Ausführungsbeispiel 1,
   dadurch gekennzeichnet, dass die Wölbung (40.1) als konvexe Wölbung (42.1) ausgebildet ist.
3. Ausführungsbeispiel (16.1) nach einem der vorstehenden Ausführungsbeispiele, dadurch gekennzeichnet, dass der Grundabschnitt (43.1) eine Wölbung aufweist, welche insbesondere als konvexe Wölbung ausgebildet ist.
4. Ausführungsbeispiel (16.1) nach einem der vorstehenden Ausführungsbeispiele, dadurch, dass auf den Innenseiten (39.1) der Schenkel (36.1, 38.1) eine Schneide (46.1) ausgebildet ist.
5. Ausführungsbeispiel (16.1) nach einem der vorstehenden Ausführungsbeispiele, dadurch gekennzeichnet, dass das Crimpelement (28.1) aus einem der folgenden Werkstoffe ausgebildet ist oder daraus besteht:
   - Metall
   - Polyoxymethylene.
6. Ausführungsbeispiel (16.1) nach einem der vorstehenden Ausführungsbeispiele, dadurch gekennzeichnet, dass die Crimpelemente (28.1) derart relativ zu den Transportelementen (22a, 22b) ausgerichtet sind, dass die Crimpelemente (28.1) in dem Transportbereich (24.1) aneinander angrenzend und parallel zueinander geführt werden.
7. Ausführungsbeispiel (16.1) nach einem der vorstehenden Ausführungsbeispiele, dadurch gekennzeichnet, dass die Transportelemente (22a, 22b) Aufnahmemittel (50.1) zur Aufnahme der Befestigungsabschnitte (32.1) der Crimpelemente (28.1) aufweisen.
8. Ausführungsbeispiel (16.1) nach einem der vorstehenden Ausführungsbeispiele, dadurch gekennzeichnet, dass der gewölbte Bereich (40.1) eine Dicke (52.1) in Transportrichtung (6.1) von 5 mm bis 20 mm aufweist..
9. Ausführungsbeispiel (16.1) nach einem der vorstehenden Ausführungsbeispiele, dadurch gekennzeichnet, dass der Öffnungswinkel (54.1) zwischen den Schenkeln (36.1, 38.1) 15° bis 120° beträgt.
10. Ausführungsbeispiel (16.1) nach einem der vorstehenden Ausführungsbeispiele, dadurch gekennzeichnet, dass der Übergang (56.1) zwischen der Wölbung des Grundabschnitts (43.1) und der Wölbung (40.1) der Schenkel (36.1, 38.1) knickfrei ausgebildet ist.
11. Crimpelement (28.1) für ein Ausführungsbeispiel (16.1) zum Trennen von Portionen (10) aus mit Lebensmittel-Masse befüllten, länglichen Hüllen (18.1), insbesondere von Würstchen (10.1) aus mit Wurstbrät gefüllten Alginat-Hüllen (18.1),
   welches einen Befestigungsabschnitt (32.1) zum Befestigen an einem bewegbaren Transportelement (22a, 22b) aufweist und einen benachbart zu dem Befestigungsabschnitt (32.1) angeordneten Crimpabschnitt (34.1),
   wobei der Crimpabschnitt (34.1) zwei sich ausgehend von einem Grundabschnitt (43.1) öffnende Schenkel (36.1, 38.1) aufweist,
   **dadurch gekennzeichnet, dass** die Schenkel (36.1, 38.1) auf ihrer im Betrieb einem benachbart angeordneten zweiten Crimpelement (28.1) abgewandten Seite gewölbt ausgebildet sind, sodass die gefüllte Hülle (18.1) unter Verdrängung der Masse in einem Einschnürbereich (30.1) zunächst eingeschnürt und anschließend durchtrennt wird.
12. Crimpelement (28.1) nach Ausführungsbeispiel 11,
   dadurch gekennzeichnet, dass das Crimpelement (28.1) gemäß mindestens einem der kennzeichnenden Merkmale der vorstehenden Ausführungsbeispiele 2 bis 10 ausgebildet ist.
13. Verfahren zum Ausbilden und Trennen von Portionen (10.1) aus mit Lebensmittel-Masse befüllten länglichen Hüllen (18.1), insbesondere von Würstchen (10.1) aus mit Wurstbrät gefüllten Alginat-Hüllen (18.1),
   bei dem Lebensmittelmasse mittels einer Füllmaschine (4) in die zu befüllende Hülle (18.1) eingefüllt wird,
   die befüllte Hülle (18.1) mittels einer Trennvorrichtung (16.1) in eine Transportrichtung (6.1) transportiert wird,
   wobei die befüllte Hülle (18.1) zwischen zwei antreibbare, umlaufende Transportelemente (22a, 22b) gebracht und mittels zweier benachbart angeordneter, jeweils an einem Transportelement (22a, 22b) angeordneter Crimpelemente (28.1) in einem Einschnürbereich (30.1) eingeschnürt und abgetrennt wird,
   dadurch gekennzeichnet, dass die Crimpelemente (28.1) derart gewölbt (40.1) ausgebildet sind, dass die Masse über die zu erzeugende Würstchenform hinaus verdrängt wird, so dass sich nach dem Entspannen bzw. Rückströmen der Masse eine runde Form an den Enden (58.1) der Würstchen-Portionen (10.1) ausbildet.

### Bezuqszeichenliste

- 1: Anordnung
- 2: Füllmaschine
- 3: Transportrichtung
- 4: Fülltrichter
- 5: Würstchen
- 6: Portioniervorrichtung
- 7: Wurst-Strang
- 8: Pre-Crimpevorrichtung
- 10: Crimpvorrichtung
- 12: Maschinengestell
- 13: Wurst-Hülle
- 14: Coextrusionseinrichtung
- 16, 18: Transportelement
- 20, 22: Crimpelemente
- 23: Einschürbereich
- 24, 26: Antriebs-Welle
- 28,30: Zahnrad
- 32, 34: Zahnrad
- 36, 38: Transportbereich
- 39: Befestigungsseite
- 40: Befestigungsabschnitt
- 42: Vorsprung
- 43: mittlerer Bereich
- 44: Funktionsbereich
- 46: Wellen, Knicke und/oder Falten
- 48: Vertiefung
- 50: Vorsprung
- 52: ebener Abschnitt
- 54: Flankenfläche
- 56: Flankenfläche
- 58: Führungselement

- 16.1: Trennvorrichtung
- 18.1: Hülle
- 20.1: Antrieb
- 22a, 22b: Transportelemente
- 24.1: Transportbereich
- 26.1: Rücklaufbereich
- 28.1: Crimpelement
- 30.1: Einschnürbereich
- 32.1: Befestigungsabschnitt
- 34.1: Crimpabschnitt
- 36.1,38.1: Schenkel
- 39.1: Schenkelinnenseiten
- 40.1: gewölbte Ausbildung
- 42.1: konvexe Wölbung
- 43.1: Grundabschnitt
- 44.1: konvexe Wölbung des Grundabschnitts
- 46.1: Schneide
- 48.1: Parallelführung
- 50.1: Aufnahmemittel
- 52.1: Dicke des gewölbten Abschnitts
- 54.1: Öffnungswinkel
- 56.1: Übergang
- 58.1: Rundes Wurstende
- 60.1: Umlenkbereich
- 62.1: Zahnriemenantrieb
- 66.1, 68.1: Transportband
- 70.1: Felgenförmiges Wurstende

## Patentansprüche

1. Portioniervorrichtung (6) zum Ausbilden von Portionen aus mit Lebensmittel-Masse befüllten, länglichen Hüllen (13), insbesondere von Würstchen (5) aus mit Wurstbrät gefüllten Alginat-Hüllen,
mit zwei beabstandet zueinander angeordneten, mittels mindestens eines Antriebs antreibbaren umlaufenden Transportelementen (16, 18), die jeweils einen Transportbereich (36, 38) aufweisen, welcher im Betrieb in eine Transportrichtung (3) bewegt wird, und einen Rücklaufbereich,
wobei die gefüllte Hülle zwischen die Transportbereiche (36, 38) der beiden Transportelemente (16, 18) eingebracht und in Transportrichtung (3) transportiert werden kann,
mindestens einem an jedem Transportelement (16, 18) angeordneten seitlich von dem Transportelement (16, 18) abstehenden Crimpelement (20, 22),
wobei zwei Crimpelemente (20, 22) der beabstandeten Transporteelemente (16, 18) so geformt und im Transportbereich (36, 38) gegenüberliegend angeordnet sind und zusammenwirken, dass die gefüllte Hülle unter Verdrängung der Masse in einem Einschnürbereich (23) eingeschnürt wird,
**dadurch gekennzeichnet, dass**
mindestens eines der Crimpelemente (20, 22) auf seinem im Transportbereich (36, 38) einem gegenüberliegenden Crimpelement (20, 22) wenigstens teilweise zugewandten Funktionsbereich (44) eine solche Form aufweist, dass in dem Einschnürbereich (23) der Hülle Wellen, Knicke und/oder Falten (46) ausgebildet werden, welche sich insbesondere im Wesentlichen parallel zur Transportrichtung (3) erstrecken.

2. Portioniervorrichtung (6) nach Anspruch 1,
**dadurch gekennzeichnet, dass** das Crimpelement (20, 22) an dem Funktionsbereich (44) wenigstens teilweise Vertiefungen (48) und/oder Vorsprünge (50) aufweist.

3. Portioniervorrichtung (6) nach Anspruch 2,
**dadurch gekennzeichnet, dass** die Vertiefungen (48) und/oder Vorsprünge (50) im Wesentlichen in einem mittleren Bereich des Funktionsbereichs (44) angeordnet sind.

4. Portioniervorrichtung (6) nach Anspruch 2 und/oder 3,
**dadurch gekennzeichnet, dass** die Vertiefungen (48) und/oder Vorsprünge (50) wenigstens teilweise innerhalb eines im Wesentlichen ebenen Abschnitts der Oberfläche angeordnet sind.

5. Portioniervorrichtung (6) nach mindestens einem der vorstehenden Ansprüche 2 bis 4,
**dadurch gekennzeichnet, dass** die Vertiefungen (48) und/oder Vorsprünge (50) im montierten Zustand im Wesentlichen parallel zur Transportrichtung (3) verlaufen.

6. Portioniervorrichtung (6) nach mindestens einem der Ansprüche 2 bis 5,
**dadurch gekennzeichnet, dass** die Länge der Vertiefungen (48) und/oder Vorsprünge (50) an einem Crimpelement (20, 22) verschieden ist, vorzugsweise die Länge der Vertiefungen (48) und/oder Vorsprünge (50) von einem mittleren Bereich (43) nach außen zunimmt.

7. Portioniervorrichtung (6) nach mindestens einem der vorstehenden Ansprüche 1 bis 6,
**dadurch gekennzeichnet, dass** im Betrieb jeweils gegenüberliegend angeordnete Crimpelemente (20, 22) an ihrem dem gegenüberliegenden Crimpelement (20, 22) zugewandten Funktionsbereich (44) konform ausgebildet sind, insbesondere so ausgebildet und relativ zueinander an den Transportelementen (16, 18) angeordnet sind, dass eine Vertiefung (48) des einen Crimpelementes (20, 22) gegenüber von einem Vorsprung (42, 50) des anderen, gegenüberliegenden Crimpelementes (20, 22) angeordnet ist und/oder ein Vorsprung (42, 50) des einen Crimpelementes (20, 22) wenigstens teilweise in eine Vertiefung (48) des gegenüberliegenden anderen Crimpelementes (20, 22) eintaucht und die dazwischenliegende Hülle dementsprechend gewellt, gefaltet, und/oder geknickt wird unter Ausbildung von Wellen, Knicken und/oder Falten (46).

8. Portioniervorrichtung (6) nach mindestens einem der vorstehenden Ansprüche 1 bis 7,
**dadurch gekennzeichnet, dass** an einem Crimpelement (20, 22) benachbart von dem mittleren Bereich (43) eines Crimpelementes (20, 22) eine erste, in Transportrichtung (3) vordere, wenigstens teilweise im Wesentlichen in einem Winkel zum mittleren Bereich (43) von vorzugsweise 0-60° angeordnete Flankenfläche (54) und/oder eine zweite, in Transportrichtung (3) hintere wenigstens teilweise im Wesentlichen in einem Winkel zum mittleren Bereich (43) angeordnete zweite Flankenfläche (56) ausgebildet sind.

9. Portioniervorrichtung (6) nach Anspruch 8,
**dadurch gekennzeichnet, dass** die erste Flankenfläche (54) und/oder zweite Flankenfläche (56) wenigstens teilweise eine konkave Form aufweist.

10. Portioniervorrichtung (6) nach Anspruch 9,
**dadurch gekennzeichnet, dass** die erste und/oder zweite Flankenfläche (54,56) eine im Wesentlichen kugelförmige, elliptische, parabelförmige oder ähnlich gekrümmte konkave Form aufweist, sodass sich durch das Zusammenwirken gegenüberliegend angeordneter Crimpelemente (20, 22) im Wesentlichen ein halbkugelförmig, elliptisches oder parabelförmiges Wurstende einer Würstchen-Portion (5) ausbildet.

11. Portioniervorrichtung (6) nach mindestens einem der vorstehenden Ansprüche, **dadurch gekennzeichnet, dass** mindestens ein Crimpelement (20,22) beabstandet zueinander in äußeren Bereichen in Relation zu den mittleren Bereichen (43), welche vorzugsweise Vertiefungen (48) und /oder Vorsprünge (50) aufweisen, Führungselemente (58), vorzugsweise plattenförmige Führungselemente (58) aufweisen, die einen solchen Abstand zueinander aufweisen, dass das im Betrieb im Transportbereich (36,38) gegenüberliegend angeordnete Crimpelement (20, 22) von den Führungselementen (58) wenigstens teilweise beidseitig umgriffen werden kann.

12. Portioniervorrichtung (6) nach mindestens einem der vorstehenden Ansprüche, **dadurch gekennzeichnet, dass** die Breite des der Vertiefungen (48) und/oder Vorsprünge (50), gemessen im Wesentlichen quer zur Transportrichtung (3), etwa 0,2 - 0,8 der gesamten Breite des Crimpelements (20, 22) ist..

13. Portioniervorrichtung (6) nach mindestens einem der vorstehenden Ansprüche, **dadurch gekennzeichnet, dass** die Vertiefungen (48) und/oder Vorsprünge (50) im Wesentlichen in einer Seitenansicht eine der folgenden Formen entsprechen: Wellenform, Dreieckswellenform, Rechteckwellenform, geschwungene Wellenform, Sinuswellenform.

14. Portioniervorrichtung (6) nach mindestens einem der vorstehenden Ansprüche, **dadurch gekennzeichnet, dass** ein Crimpelement (20,22) an seiner dem Transportelement (16, 18) zugewandten Seite Befestigungsmittel zum lösbaren formschlüssigen Koppeln des Crimpelementes (20, 22) an dem Transportelement (16, 18), vorzugsweise Schrauben und/oder Einrastmittel und/oder Vorsprünge (50)und/oder Vertiefungen (48) aufweist.

15. Crimpelement (20, 22), insbesondere Precrimpelement, für eine Portioniervorrichtung (6) zum Ausbilden von Portionen aus mit Lebensmittel-Masse befüllten Hüllen, insbesondere Würstchen (5),
welches an seiner Innenseite Befestigungsmittel zum Befestigen an einem bewegbaren Transportelement (16, 18) aufweist,
**dadurch gekennzeichnet, dass**
mindestens eines der Crimpelemente (20, 22) auf seinem im Transportbereich (36, 38) einem gegenüberliegenden Crimpelement (20, 22) wenigstens teilweise zugewandten Funktionsbereich (44) eine solche Form aufweist, dass in dem Einschnürbereich (23) der Hülle Wellen, Knicke und/oder Falten (46) ausgebildet werden, welche sich insbesondere im Wesentlichen parallel zur Transportrichtung (3) erstrecken.

16. Crimpelement (20,22) nach Anspruch 15,
**dadurch gekennzeichnet, dass** es gemäß mindestens einem der kennzeichnenden Merkmale der vorstehenden Ansprüche 2 bis 14 ausgebildet ist.

17. Verfahren zum Ausbilden von Portionen aus mit Lebensmittel-Masse befüllten, länglichen Hüllen, insbesondere von Würstchen (5) aus mit Wurstbrät gefüllten Alginat-Hüllen,
bei dem Lebensmittelmasse mittels einer Füllmaschine (2) in die zu befüllende Hülle eingefüllt wird,
die befüllte Hülle mittels einer Portioniervorrichtung (6), vorzugsweise gemäß mindestens einem der vorstehenden Ansprüche, in eine Transportrichtung (3) transportiert wird, wobei die befüllte Hülle zwischen zwei antreibbare, umlaufende Transportelemente (16, 18) gebracht und mittels zweier gegenüberliegend angeordneter, jeweils an einem Transportelement (16, 18) angeordneter Crimpelemente (20, 22) in einem Einschnürbereich (23) eingeschnürt wird,
**dadurch gekennzeichnet, dass** aufgrund der Form und Anordnung der gegenüberliegenden Crimpelemente (20, 22) in dem Einschnürbereich (23) der Hülle Wellen, Knicke und/oder Falten (46) ausgebildet werden, welche sich insbesondere im Wesentlichen parallel zur Transportrichtung (3) erstrecken.

18. Anordnung zum Ausbilden von Portionen aus mit Lebensmittel-Masse befüllten, länglichen Hüllen, insbesondere von Würstchen (5) aus mit Wurstbrät gefüllten Alginat-Hüllen,
mit einer Füllmaschine (2),
und einer Portioniervorrichtung (6) nach mindestens einem der vorstehenden Ansprüche und/oder einer Trennvorrichtung.
